# EUROPEAN PATENT APPLICATION

(11) **EP 2 647 458 A1**
(43) Date of publication of application: **09.10.2013**
(21) Application number: 12163224.4
(22) Date of filing: 04.04.2012
(51) Int. Cl.: B23D 61/18

(54) **Wire for semiconductor wire saw and wire saw**

(71) Applicant: Applied Materials Switzerland Sàrl, 1033 Cheseaux-sur-Lausanne (CH)
(72) Inventor: Nasch, Philippe, 1052 Le Mont-sur-Lausanne (CH)
(74) Representative: Zimmermann & Partner

(57) **Abstract**

A wire (200) is provided that is adapted for sawing semiconductor material (102; 104; 106; 108), wherein the wire includes a non-circular cross section. Furthermore, a wire guide (112, 114, 116, 118) adapted for guiding the wire (200) for sawing semiconductor material (102, 104, 106, 108) as described is provided. The wire guide comprising at least one groove that includes a rectangular or trapezoidal cross-section.

## Description

### FIELD OF THE INVENTION

Embodiments of the present disclosure relate to a wire adapted for sawing semiconductor material, a wire saw for sawing semiconductor material, and a method for sawing semiconductor material such as, but not limited to, silicon, for instance in the shape of a block or brick of silicon. In particular, the present disclosure relates to thin wires, in particular to wires having an extension of less than 200 µm. Existing wire saws may be retrofitted with the ability to operate with the wire according to the present disclosure. The present disclosure particularly relates to multi-wire saws. Wire saws of the present disclosure are particularly adapted for cutting or sawing hard materials such as blocks of silicon or quartz, e.g., for cutting silicon wafers, for a squarer, for a cropper or the like.

### BACKGROUND OF THE INVENTION

Wire saws are used for cutting blocks, bricks or thin slices, e.g., semiconductor wafers, from a piece of hard material such as silicon. In such devices, a wire is fed from a spool and is both guided and tensioned by wire guide cylinders, herein also called wire guides. The wire that is used for sawing is generally provided with an abrasive material. As one option, the abrasive material can be provided as slurry. This may be done shortly before the wire touches the material to be cut. Thereby, the abrasive is carried to the cutting position by the wire for cutting the material. As another option, the abrasive can be provided on the wire with a coating, e.g. as a diamond wire. For example, diamond particles can be provided on a metal wire with a coating, wherein the diamond particles are imbedded in the coating of the wire. Thereby, the abrasive is firmly connected with the wire.

The wire is guided and/or maintained tensioned by wire guides. The wire typically moves constantly over the wire guides, in particular with the speeds given below. These wire guides are generally covered with a layer of synthetic resin and are scored with grooves having very precise geometry and size. The wire is wound around the wire guides and forms a web or wire web. During the sawing process, the wire is moved with considerable speed. The web generates a force opposite to the advance of a support beam or a support holding the piece to be sawed. During sawing, the piece to be sawed is moved through the wire web wherein the speed of this movement determines the cutting speed and/or the effective cutting area that can be sawed within a given amount of time.

Nowadays, in the main technology for silicon shaping such as brick squaring and wafer slicing, the wire consists of a high-resistance, high-carbon content steel. The wire cross section is circular. The wire can be used as bare steel with an abrasive-free suspension as the cutting agent, or it can be coated with diamond grits bounded to the steel core by electroplating or resin technology. The diameter of the wire is crucial as it determines the amount of lost material during a cut. With a wafer thickness in the order of, for instance, 180-200 µm, and a wire diameter in the range of, for instance, 120-140 µm, the amount of lost material generated in the slicing channel can sum up to, for instance, 150-170 µm. That is, almost 50% of the initial amount of semiconductor material loaded in the wire saw is lost. Because the raw material is the main cost contributor to the wafering cost, it becomes important to reduce the amount of lost material (the so-called "kerf loss").

Generally, there is a tendency to use wires having reduced diameter in order to reduce the thickness of the cut and, thereby, to decrease the material wasted. However, the wires with the reduced diameter are generally more susceptible to damage and, under high strain, the wires may break more easily. In the case of a breakage of a wire, the operation of the wire saw has to be halted, and a new wire has to be applied. The loaded semiconductor material having a considerable value may be damaged and is consequently lost. Additionally, replacing the wire is time consuming and consequently implies high stand still costs. Further unwanted consequences may arise in the event of a wire breakage. The loose ends of the wire may move around in the machine in an uncontrollable manner that might harm the wire guide system or other parts of the machine. Further, if the wire breaks and moves on, it will be torn out of the object to be sawed.

Evidently, there is a trade-off between the perfect diameter for minimizing the kerf loss and the perfect diameter for maximizing the wire's stability. It is desired to have as little kerf loss of the sawed material as possible whilst, at the same time, avoiding loss of semiconductor material and down times due to breakage of the wire as much as possible. Present solutions reduce the wire tension in order to reduce the breakage probability. However, since the tension is a parameter of utmost importance for a high precision slicing, those solutions are only partly satisfying.

### SUMMARY

In view of the above, a wire adapted for sawing semiconductor material is provided. The wire includes a non-circular cross section.

According to an aspect, a wire guide for guiding a wire as described herein is provided. The wire guide includes a groove wherein the groove's cross-section is adapted for receiving the wire as described herein. According to an aspect, the groove has a rectangular or trapezoidal cross-section.

According to an aspect, a wire saw for sawing semiconductor material including the wire as described herein is provided. In particular, the wire saw may be a multi-wire saw.

According to yet another aspect, a wire saw for sawing semiconductor material is provided. The wire saw includes at least one wire guide for guiding the wire as described herein. In particular, the wire saw may include two or four wire guides as described herein.

According to yet a further aspect, a method for coiling the wire as disclosed herein on a spool is provided. According to this aspect, the wire has one or more slicing sides and one or more wire web sides with the slicing sides having a smaller width than the wire web sides. The method includes coiling the wire so that one of the wire web sides faces the spool surface.

According to a yet further aspect, an existing wire saw may be retrofitted to operate with the wire as described herein. The method includes removing at least one wire guide and mounting at least one wire guide as described herein.

According to a yet further aspect, a method for operating a wire saw is provided. The method for operating a wire saw includes providing a non-circular wire as disclosed herein and sawing a semiconductor material with the wire saw.

Further advantages, features, aspects and details are apparent from the dependent claims, the description and the drawings.

Embodiments are also directed at apparatuses for carrying out the disclosed methods and include apparatus parts for performing each described method step. These method steps may be performed by way of hardware components, a computer programmed by appropriate software, by any combination of the two or in any other manner. Furthermore, embodiments according to the invention are also directed at methods by which the described apparatus operates. It includes method steps for carrying out every function of the apparatus.

### BRIEF DESCRIPTION OF THE DRAWINGS

So that the manner in which the above recited features of the present invention can be understood in detail, a more particular description of the invention, briefly summarized above, may be had by reference to embodiments. The accompanying drawings relate to embodiments of the invention and are described in the following:

Fig. 1 shows a schematic perspective side view of a wire saw control system and a wire saw according to embodiments described herein.

Fig. 2 shows a schematic perspective top view of a wire saw control system and a wire saw according to embodiments described herein.

Figs. 3, 4A, 4B, 5, 6, and 7 are three-dimensional schematic views illustrating various embodiments of a non-circular wire according to the present disclosure.

Fig. 8 is a schematic cross-section of an embodiment of a wire according to embodiments described herein, wherein the wire has a trapezoidal shape.

Fig. 9 is a schematic cross-section illustrating the effect of sawing a semiconductor material with a wire having a circular cross-section.

Fig. 10 is a schematic cross-section illustrating the effect of sawing a semiconductor material with a wire having a non-circular cross-section.

Fig. 11 is a schematic three-dimensional view of a non-circular wire sawing through a block of semiconductor material.

Fig. 12 is a schematic cross-section through a part of a wire guide according to embodiments described herein.

Fig. 13 is a schematic cross-section through a part of a wire guide according to embodiments described herein.

### DETAILED DESCRIPTION OF THE INVENTION

Reference will now be made in detail to the various embodiments of the invention, one or more examples of which are illustrated in the figures. Within the following description of the drawings, the same reference numbers refer to same components. Generally, only the differences with respect to individual embodiments are described. Each example is provided by way of explanation of the invention and is not meant as a limitation of the invention. Further, features illustrated or described as part of one embodiment can be used on or in conjunction with other embodiments to yield yet a further embodiment. It is intended that the description includes such modifications and variations.

A wire saw as understood herein may be a cropper, a squarer, or a wafer cutting wire saw for cutting semiconductor material. A wire as understood herein shall be understood as a wire for sawing semiconductor material, in particular, a wire for use in a cropper, a squarer, or a wafer cutting wire saw. In particular, a wire saw as understood herein shall be understood as a wire saw wherein a wire of considerable length, such as at least 1 km, typically at least 10 km, or even at least 100 km, is moved through the wire saw thereby performing a multitude of slicing actions. The terms "non-circular wire" and "wire with a non-circular cross-section" as well as "rectangular wire" and "wire with a rectangular cross-section" are used synonymously herein. The term "wire length" refers to the overall length of the wire and thus not only to the wire that is, at a given time, used for sawing.

According to embodiments described herein, the methods of operating a wire saw can be conducted by means of computer programs, software, computer software products and the interrelated controllers, which can typically have a CPU, a memory, a user interface, and input and output means being in communication with the corresponding components of the wire saw. These components can be one or more of the following components: motors, wire break detection units, wire tracking devices, and the like, which will be described in more detail below.

Typically, the wire saw includes a wire guide for transporting and guiding the wire in a wire moving direction. The wire guides are typically adapted to rotate in order to transport the wire. The wire guides are normally configured to rotate at a circumferential speed (i.e., the speed at the outer circumference) of at least 5 m/s or even 10 m/s. It is typical that the wire saw is operated between 10 m/s and 15 m/s during standard operation whereas the speed may be smaller during start and stop. Also, in the event of a back and forth movement of the wire, evidently, the wire is decelerated from time to time in order to accelerate it in the opposite direction.

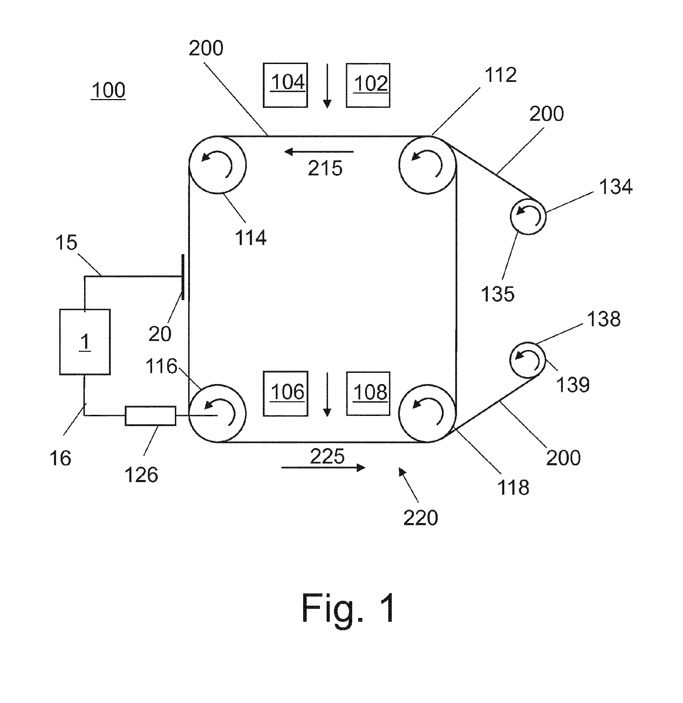

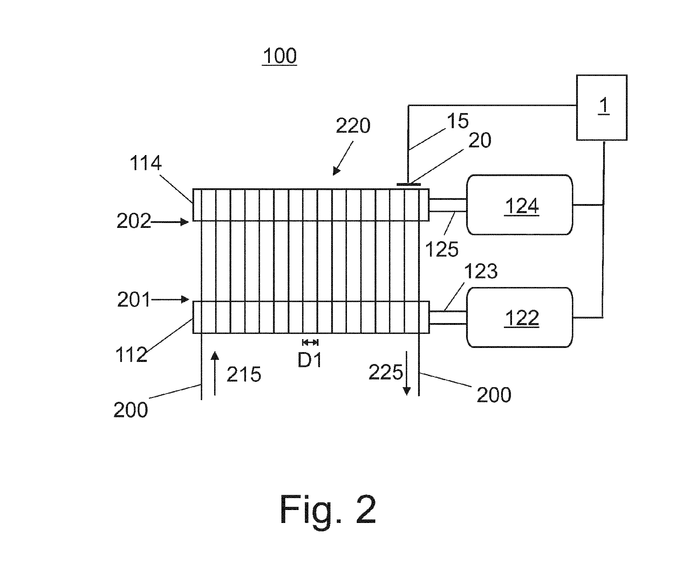

A wire saw control system may provide control of the wire tension. The wire provided forms a wire web in particular in the cutting area of the wire saw. Thereby, the term "wire web" normally relates to the web formed by the wire between two guide cylinders. It should be understood that a wire may form more than one wire web which is defined as an area in which a sawing process is performed. Thus, according to some embodiments described herein, the one or more wires may form multiple wire webs, for instance two (such as in Fig. 1 and 2 discussed below).

For instance, as will be illustrated in more detail below with respect to the embodiment of Figs. 1 to 2, the wire saw may include two horizontally oriented wire webs, for instance, including two or four horizontally oriented working areas. In this case, sawing is performed by pushing an ingot or a brick in a vertical direction through the wire web defining the working area. Generally, and not limited to any specific embodiment described herein, the phrase "cutting a wafer" particularly includes "cutting an ingot into wafers". Furthermore, as used generally herein, the term "cutting" is used synonymously with "slicing" or "sawing".

It is possible that sawing is undertaken at the same time at the upper wire web and the lower wire web. The wire saw may furthermore include two vertically arranged webs. According to some embodiments, the vertically arranged webs are used for transporting the wire between the horizontally oriented working areas. During transport between the working areas the wire can cool down. According to other embodiments, the working areas are oriented vertically.

For modem wire saws like croppers, squarers, wafering systems, or multi-wire saws, there is the desire to cut the hard material such as semiconductor material, for example, silicon, quartz, or the like at high speed. The wire speed, that is the speed of the wire moving through the wire saw can be, for example, 10 m/s or even higher. Typically, the wire speed can be in a range of 10 to 15 m/s. However, higher wire speeds, such as of 20 m/s, 25 m/s or 30 m/s can also be desirable. According to some embodiments, the movement of the wire is only unidirectional, i.e., always in the forward direction. According to other embodiments, the movement may include a movement in the backward direction, in particular, the movement can be a back-and-forth movement of the wire in which the movement direction of the wire is amended repeatedly. For unwinding the wire at the desired wire speed, the feed spool with unused wire typically rotates with a rotation speed of up to several thousands rotations per minute. For example, 1000 to 2000 rpm can be provided for unwinding the wire.

According to the present disclosure, the wire's cross-section is non-circular. In particular, the wire's cross section may be rectangular, possibly with rounded corners. Furthermore, according to embodiments, the wire's cross section is typically non-square, in particular, the wire's cross-section is non-square rectangular.

As used herein, the term "slicing direction" corresponds to the direction the wire is pushed through the semiconductor material for slicing the semiconductor. The direction perpendicular thereto shall be called "wire web direction" herein because this direction lies in the plane of the wire web. As used herein, that side of the wire which, when in operation of the saw, intrudes into the semiconductor material, shall be called "slicing side". As used herein, the one or more wire sides (typically two) that does not essentially contribute to the slicing process shall be called the "wire web side(s)". As this naming shall reflect, in typical embodiments the wire web sides of a wire are oriented in the plane of the wire web. Typically, the wire web side has a surface that is essentially parallel to the slicing direction. The term "essentially" in this context shall be understood as embracing a deviation of less than 10°, more typically less than 5°. According to typical embodiments, the surface of the slicing side, apart from indentations provided on the surface of the slicing side, is perpendicular to the surface of the wire web side of the wire.

In some embodiments, the wire saw allows for slicing at more than one web. An example of such a wire saw is depicted in Fig. 1 which will be discussed in more detail below. In such a situation, the slicing side of the wire at one web (e.g., at the upper web) is the opposite side of the wire at the other web (e.g., at the lower web). Hence, the term "slicing side" of the wire may refer to both sides of the wire that are adapted to slice through the semiconductor material during sawing. Similarly, the term "wire web side" refers generally to both sides of the wire that are not adapted to essentially contribute to the slicing process. Generally, the wire web side is oriented towards the adjacent wire.

In embodiments pertaining to a wafer cutting wire saw, the width of the wire on the slicing side may smaller than 120 µm, in particular smaller than 100 µm, and even more particular smaller than 80 µm. The width of the wire web side is typically larger than the width of the slicing side of the wire. According to some embodiments, the width of the wire web side is at least two times the width of the slicing side, more particularly at least three times the width of the slicing side. For instance, the width of the wire web side may be larger than 140 µm, more particularly larger than 200 µm or even larger than 250 µm.

According to typical embodiments, a multi-wire saw is used. A multi-wire saw allows high productivity and high quality slicing of silicon wafers for the semiconductor and photovoltaic industries. A multi-wire saw includes typically a high-strength steel wire that may be moved uni-directionally (i.e., only in the forward direction) or bi-directionally (i.e., backwards and forwards) to perform the cutting action. The wire may be provided with diamonds on its surface. By using diamond wire according to the present disclosure, the throughput may be increased by a factor of 2 or even more in comparison to conventional steel wire. The speed with which the material to be sawed is moved relatively to the moving wire may be referred to as the material feed rate. The material feed rate in the embodiments described herein may be in the range of 2 µm/s to 15 µm/s, typically about 6 µm/s to 10 µm/s for a wafer cutting wire saw.

The wire may be wound on wire guides, herein referred to also as guide cylinders, which are normally grooved with constant pitch, forming a horizontal net of parallel wires or wire web. The wire guides are rotated by drives that cause the entire wire-web to move at a relatively high speed of, for instance, at a speed of between 5 and 20 m/s. If desired, several high flow-rate nozzles may feed the moving wires with slurry. A slurry as understood herein refers to a liquid carrier with suspended abrasion particles, e.g., particles of silicon carbide. During the cutting action, the ingot may be pushed through the wire web. Alternatively, the ingot may be stationary while the wire web is pushed through it. A wire feed spool provides the required new wire and a wire take-up spool stores the used wire.

It is desired to optimize the productivity of the wire saw. The present disclosure thus provides a non-circular wire that has at least the same stability and tear resistance as a conventional circular wire, however, the resulting kerf loss of the sawing process is essentially smaller as compared to the kerf loss occurring in the sawing process with a conventional circular wire.

According to typical embodiments, the wire's cross section typically has an extension of the slicing side that is smaller than the extension of the wire web side. As used herein, the ratio between the extension of the slicing side and the extension of the wire web side shall be called "aspect ratio" of the wire. It is typical that the aspect ratio is smaller than 1.0 or even smaller than 0.5. Generally, the width of the wire web side does not contribute to the kerf loss and can thus be chosen to be comparably large.

Since the wire also has to be moved over wire guides acting as deflecting pulleys, and a very long wire web side could cause problems in this regards, it is typical that the length of the wire web side is not larger than 300 µm, more typically not larger than 250 µm. Also, there might be a lower limit for the aspect ratio, for instance, the aspect ratio may be chosen larger than 0.2.

Fig. 1 shows a schematic side view of a wire saw 100 including a wire saw control system 1 according to embodiments disclosed herein, and Fig. 2 shows a schematic top view of the wire saw 100. The wire saw control system 1 may include a sensor 20, such as for measuring whether the wire is still operable or might suffer from cracks or even breakage. For instance, the sensor may measure the presence of a voltage in the wire. Alternatively, the sensor may measure physical properties of the wire or may be an optical sensor. The sensor 20 may be connected to the control system 1 via a cable or wireless connection 15. The control system 1 is configured to control the sawing process.

The wire saw 100 has a wire guide device including four wire guide cylinders 112, 114, 116, 118, herein also referred to as "wire guides". Typically, the wire guides 112, 114, 116, 118 are covered with a layer of synthetic resin and are scored with grooves having very precise geometry and size, as will be discussed in more detail below. The distance between the grooves, also called the pitch of the grooves, determines the distance D1 (shown in Fig. 2) between two adjacent strings or lines of wire 200. The distance D1 minus the wire's length of the slicing side sets an upper limit for the thickness of the slices cut by the wire saw.

Typically, and not limited to any embodiment, the wire slicing side width is between 50 µm and 120 µm. The distance D1 between adjacent grooves on the wire guides is from 200 µm to 400 µm, typically in the range of 270 µm to 320 µm. As an example, the grooves may have a pitch of below 330 µm to 360 µm, but also smaller sizes such as smaller than 280 µm, or smaller than 200 µm are possible. Herein, the term "pitch" shall be understood as the distance between the centers of the grooves. According to some embodiments, which can be combined with the other embodiments described herein, the pitch, or distance between the grooves, results in spacing between adjacent wires of about from 110 µm to 330 µm, typically 190 µm to 250 µm.

According to different embodiments, which can be combined with other embodiments described herein, the pitch can be smaller than 330 µm, possibly smaller than 300 µm or even smaller than 270 µm. The distance between adjacent wires can be in a range of less than 220 µm, for example, less than 190 µm; and/or the resulting wafer thickness can be in a range of larger than 80 µm and/or smaller than 250 µm, for example, between 120 µm and 220 µm, such as between 180 µm and 220 µm.

Furthermore, each wire guide cylinder 112, 114, 116, 118 may be connected to a motor or drive. In order to reduce the complexity of the figures, in Fig. 1 only motor 126 is shown, and in Fig. 2 only motors 122 and 124 are shown. The motors are connected to the respective wire guides. For instance, motor 122 may be connected to the wire guides 112, motor 124 may be connected to the wire guides 114, and motor 126 may be connected to the wire guides 116. Furthermore, the motors 122, 124, 126 may be controlled by the controller 25 via a cable or wireless connection, such as connection 16 illustrated in Fig. 1. According to some embodiments, each wire guide is driven by a motor. According to embodiments, each motor may be adapted for performing a back-and-forth movement of the wire. It is also possible that the movement direction of the wire is not altered during sawing as illustrated by the arrows referred to with numbers 215, 225 in Fig. 1.

During the cutting action, one or more ingots 102, 104, 106, 108 may be pushed through the wire web in order to slice it or them. This is indicated by the arrows sandwiched between ingots 102, 104, and 106, 108, respectively. Typically, the one or more ingots are supported by a table (not shown) which can be moved with a speed which is called "table speed" herein. Alternatively, the ingots 102, 104, 106, 108 may be stationary while the wire web is pushed through it. According to embodiments, each of the one or more ingots are sliced into a multitude of wafers, such as at least 500 or even more. Typical lengths of the ingots are in the range of up to 250 mm, in particular in the case of multi-crystalline Silicon, and up to 500 mm, in particular in case of mono-crystalline Silicon.

According to typical embodiments, a wire feed spool 134 is provided with a wire 200 reservoir. The wire feed spool 134, if still complete, typically holds the length of several hundred kilometers of wire. The wire feed spool is provided with a surface 135 on which the wire 200 is coiled, and from which the wire is uncoiled during sawing. During operation of the wire saw, the wire is fed to the sawing process by the wire feed spool 134 to the wire guides 112, 114, 116, 118.

A wire take-up spool 138 may be provided on which the used wire 200 is recoiled. The wire take-up spool is provided with a surface 139 on which the wire 200 is coiled after it has been guided through the wire saw device. In the embodiments, the rotational axis of wire feed spool 134 and take-up spool 138 are parallel to the rotational axes of the wire guide cylinders 112, 114, 116, 118. Accordingly, typically no deflection pulley or similar device is required for feeding the wire to the wire guide 110. Typically, further devices such as low inertia pulleys (not shown) and tension arms (not shown), for wire tension regulation with optional digital coders on the tension arms, may be provided.

The wire 200 is spirally wound about the wire guides 112, 114 and forms a layer of parallel wires between the two wire guide cylinders. This layer is typically referred to as a wire web 200. The grooves specifically adapted to the non-circular wire allow the proper positioning and guiding of the wire (see detailed discussion below).

For instance, the grooves as disclosed herein may particularly be adapted to receive a non-square rectangular wire. According to many embodiments, the width of the slicing side of the wire is smaller than the width of the wire web side of the wire. The width of the grooves of the wire guides is typically adapted to receive the slicing side of the wire. According to embodiments, the width of the groove bottom is smaller than the length of the depth of the groove in the wire guide. Defining the term "groove aspect ratio" as the ratio of the groove bottom width to the groove depth, the groove aspect ratio is below 1.0 in typical embodiments, more typically below 0.7.

In the embodiments illustrated, four wire webs are provided. Sawing takes place using at least one wire web, typically using two wire webs at the same time (as illustrated in Fig. 1). The number of parallel wire portions typically corresponds to the number of cuts. For instance, the wire may be wound up in such a way that the resulting wire web includes 100 wire portions arranged in parallel. A wafer pushed through this web of 100 wires is sliced into 101 pieces.

According to some embodiments, which can be combined with other embodiments described herein, two or more wire feed spools are provided for forming at least one wire web. For example, two, three or even four wire feed spools can be used to provide the wire. Thereby, according to different embodiments a method of sawing thinner wafers, e.g., in a range of 100 µm to 170 µm can be provided. Typically, the thinner wafers can also be sawed at higher speeds, such as having a material feed rate in the range of 2 µm/s to 12 µm/s, typically about 5 µm/s to 7 µm/s.

Compared to a single wire system, the load on each wire can be reduced by having two or more wire feed spools and, thus, two or more independent wires. According to typical embodiments, in the case of a multi-wire saw having two or more wires, the wires are identical in their cross-sectional shape, for instance, the two or more wires may have a rectangular shape. For a single wire web the load is increased as compared to a multi-wire web due to the increase of the wafer surface area to wire surface area. The decreased load in the case of a multi-wire saw can result in lower cutting speeds. Accordingly, using two or more wires can increase the cutting speed, e.g., such that an effective cutting area or a cutting area rate of 12 m²/h or more can be provided.

Fig. 2 shows a top perspective of the wire saw as illustrated in Fig. 1. The elements have been explained already with respect to Fig. 1.

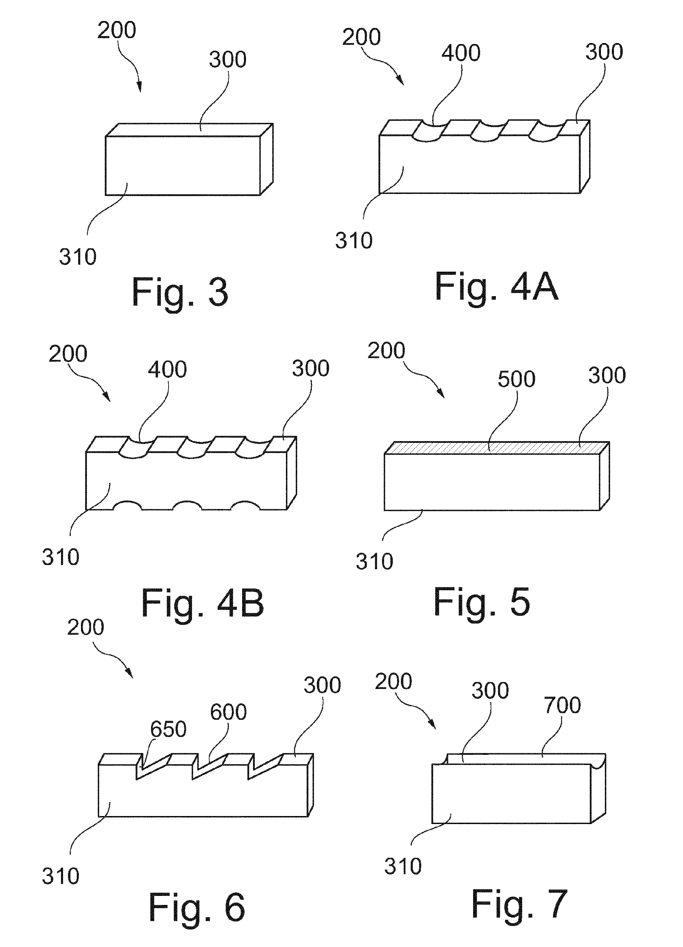

The following Figures 3 to 7 show three-dimensional views of possible wire shapes. As shown in these Figures, but not limited to the embodiments illustrated, the wire may have a non-square (i.e., the length of the slicing side is different from the length of the wire web side) rectangular shape. In addition, the slicing side of the wire may have additional features, such as indentations, as will be discussed in the following illustrative description of the Figures 3 to 7. For those embodiments where two sides of the wire are used for slicing, the additional features as described in the following can be provided on both slicing sides. An example is given in Fig. 4B. However, it shall be understood that the described features on both slicing sides can also be provided in the case of other surface shapes, such as, but not limited to, those described with respect to Figures 3 and 5-8.

Fig. 3 illustrates a wire 200 with a flat slicing side 300. The slicing side may be provided with diamonds or other abrasives. Alternatively, for sawing processes with the use of slurry, the slicing side may be bare. Additionally, the wire web side 310 is denoted in Fig. 3. Generally, and not limited to the embodiment of Fig. 3, the wire web side is typically perpendicular to the slicing side. A wire as illustrated in Fig. 3 shall be called "bare-type" herein.

Fig. 4A illustrates a wire 200 with the slicing side being provided with a multitude of indentations 400. Generally, as illustrated also in the embodiment of Fig. 4A, the multitude of indentations 400 extend along the wire's width. As shown in the Figure, the indentations may be spaced apart from each other. In Fig. 4A, the indentations are illustrated as being semi-elliptical in shape. Alternative shapes of the indentations are semi-circular, rectangular, or combinations thereof. Such a wire shall be called "crimped-type" herein.

Fig. 4B shall represent an example wherein the shape provided at one slicing side of the wire can also be applied at the opposite side of the wire, i.e., at the other slicing side. This is generally true and not limited to the embodiment wherein the wire is provided with semi-elliptical indentations.

Fig. 5 shows a wire 200 with the slicing side being provided with a layer 500 of abrasive. For instance, the abrasive may be a coating that includes diamonds. The abrasive may be provided on both slicing sides of the wire. The abrasive may be fixed to the wire by means of, for instance, adhesive or the like. Herein, such a wire shall be called "fixed abrasive rim"-type. Generally, and not limited to any embodiment, a layer of abrasive may be provided additionally to a particular shape of the slicing side, such as the shapes illustrated with respect to Fig. 4A, 6, or 7 herein.

Fig. 6 illustrates a wire 200 with the slicing side being provided with triangular indentations 600. As shown, and not limited to the triangular shape of the indentations, the indentations may have a non-symmetric shape. In particular, and not limited to the presently illustrated embodiment, the indentation may have one side 650 of the indentation that is oriented parallel to the slicing direction of the wire. In particular, the wire's slicing side may have a saw-tooth shape, and the embodiments as exemplarily illustrated with respect to Fig. 6 shall be called "saw tooth"-type herein. The same shaping may be provided to the opposite side of the wire, that is, the other slicing side.

Fig. 7 illustrates an exemplary wire 200 with the slicing side being provided with a continuous indentation. It is typical that the continuous indentation extends along the wire's length. In the embodiment illustrated in Fig. 7, the continuous indentation has the shape of a half pipe 700. However, in alternative embodiments, such a continuous indentation may have any other shape extending along the wire's length. The term "continuous" as understood in this context shall particularly reflect that the same indentation typically extends over the complete wire length. Nevertheless, it is possible that in addition to the continuous indentations extending in the wire length direction, further indentations can be provided that extend in the wire's width direction, for instance, in intervals. The particular wire shown in Fig. 7 shall be called "half-pipe"-type herein.

The embodiments of the wire 200 as exemplarily illustrated with respect to Figures 4, 6, and 7 are particularly beneficial for slurry based sawing because the provided indentations allow for the slurry to gather therein thus improving the slicing process. Furthermore, shapes resulting in sharp corners, such as the saw tooth shape illustrated with respect to Fig. 6, may further improve the abrasion process during operation of the wire saw, and thus increase the efficiency of the wire.

The exemplary shapes of the wire illustrated so far may furthermore be combined with each other. For instance, the half-pipe type wire as illustrated with respect to Fig. 7 may be combined with a crimped-type wire as illustrated with respect to Fig. 4A and Fig. 4B, or combined with the saw tooth wire as illustrated with respect to Fig. 6. Furthermore, each of the wire shapes or wire shape combinations may be provided with abrasive fixed thereto.

Furthermore, it is typical that the wire web side of the wire is flat, that is, it is free of recesses and protrusions. This is because any shaping, such as protrusions or abrasive coatings would result in additional abrasive effects when the wire is moved through the ingot. This in turn, however, would further increase the kerf loss. According to many embodiments, the surface of the wire web side of the wire 200 is parallel to the slicing direction in order to avoid any abrasive effect from the wire web side.

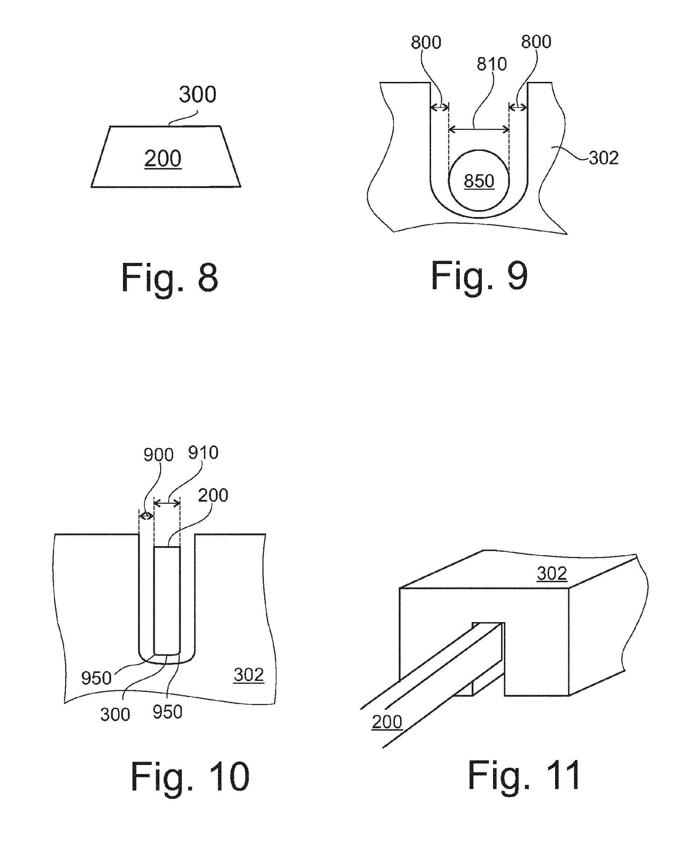

Fig. 9 shall illustrate the conventional sawing process through an ingot 302, and Fig. 10 shall illustrate the sawing process through an ingot 302 with the use of a non-circular wire as disclosed herein. As shown, the wire 850 of Fig. 9 has a circular cross-section. The diameter of the wire is denoted by reference number 810. During the sawing process, due to the lost material, the effective slicing width is essentially larger, namely, the distance 810 plus twice the one side kerf loss distance 800. The side kerf loss may be higher in the case of slurry based sawing than in the case of diamond wire sawing. Either way, during sawing, the material with a distance of the distance 810 plus two times the distance 800 is lost. As used herein, this overall distance shall be called "kerf loss". Since the semiconductor material is expensive, and since typically a high number of slices have to be done during a sawing process, it is evident that every reduction of the kerf loss is desirable.

Fig. 10 illustrates a sawing process through an ingot 302 wherein an embodiment of a non-circular wire 200 as disclosed herein is used. The kerf loss of semiconductor material is twice the one side kerf loss 900 plus the width of the wire 200 at its slicing side. The wire 200 depicted for illustrative purposes has an aspect ratio of less than 0.25. Furthermore, the slicing side 300 is shown as having a flat shape wherein the corners 950 may be rounded. However, any other shape of the wire is also possible, in particular the shapes discussed earlier with respect to Figs. 3 to 7.

As it is evident from a comparison of the two illustrated situations, the overall loss due to the kerf loss is essentially smaller in the case of the use of a wire, according to the embodiments disclosed herein. At the same time, since the presently disclosed wires still provide a high resistance to breakage, i.e. a high tensile strength, due to their typically increased extension in the slicing direction, as compared to a circular wire, this thus allows for an operation of the wire saw with a low number of failures and/or breakages. According to embodiments, the stability of the wire disclosed herein is improved as compared to a circular wire.

Put in other words, let the area of the cross-section of a circular wire (π times square of half of the diameter of the wire) be equal to the size of the non-circular wire according to the presently disclosed embodiments (for instance, in the case of a rectangular wire, the width of the slicing side times the width of the wire web side), then the loss of the slicing process with the wire of the presently disclosed embodiments is reduced as compared to the loss with a circular wire. For instance, if a circular wire would have a diameter of 120 µm, then the area of the cross-section is 11,310 µm². A non-circular wire having the same cross-section area, with a width of the slicing side of 60 µm, would have a width of the wire web side of about 188 µm, so that the aspect ratio is 0.32.

Further embodiments are evident from tables 1 and 2 below.

Table 1 allows for a comparison between the diameter of a circular wire and the extensions of a rectangular wire. All values are given in micrometers apart from the area that is given in µm². The first row refers to the circular wires known in the art as having a diameter between 80 µm and 180 µm. The second row indicates the resulting cross section area (π times square of half of the diameter of the wire). The following rows indicate, in the first column, several possibilities of the width of the slicing side, ranging from 50 µm to 150 µm. The other columns of the subsequent rows correspond to the width of the wire web side of the wire that is required in order to obtain the identical cross section area as in the case of a circular wire.

For instance, a conventional circular wire with a diameter of 130 µm has a cross section area of about 13,273 µm². Should one consider replacing this wire with a rectangular wire having an identical cross section area as disclosed herein, wherein the slicing side shall be 80 mm, one would need a wire web side with a width of 166 µm. This is because 80 µm times 166 µm is roughly 13,273 µm², namely, 13,280 µm². The resulting aspect ratio is 80/166=0.48.

**Table 1 - Vertical extension in µm**

| | | | | | | | | |
|---|---|---|---|---|---|---|---|---|
| Diameter: | 80 | 100 | 110 | 120 | 130 | 140 | 160 | 180 |
| Area: | 5027 | 7854 | 9503 | 11310 | 13273 | 15394 | 20106 | 25447 |
| | | | | | | | | |

| Slicing side | Resulting wire web side | | | | | | | |
|---|---|---|---|---|---|---|---|---|
| 50 | 101 | 157 | 190 | 226 | 265 | 308 | 402 | 509 |
| 60 | 84 | 131 | 158 | 188 | 221 | 257 | 335 | 424 |
| 70 | | 112 | 136 | 162 | 190 | 220 | 287 | 364 |
| 80 | | 98 | 119 | 141 | 166 | 192 | 251 | 318 |
| 90 | | | 106 | 126 | 147 | 171 | 223 | 283 |
| 100 | | | | 113 | 133 | 154 | 201 | 254 |
| 110 | | | | | 121 | 140 | 183 | 231 |
| 120 | | | | | | 128 | 168 | 212 |
| 130 | | | | | | | 155 | 196 |
| 140 | | | | | | | | 182 |
| 150 | | | | | | | | 170 |

Table 2 is about the resulting aspect ratio. All values apart from the aspect ratio are given in micrometers. Whereas the first rows and the first column are identical to table 1, the remainder of the table corresponds to the resulting aspect ratios for the case that the same wire cross section area as in the case of the circular wire known in the art is desired.

**Table 2 - Aspect ratio**

| | | | | | | | | |
|---|---|---|---|---|---|---|---|---|
| Diameter: | 80 | 100 | 110 | 120 | 130 | 140 | 160 | 180 |
| Area: | 5027 | 7854 | 9503 | 11310 | 13273 | 15394 | 20106 | 25447 |
| | | | | | | | | |

| Slicing side | Resulting aspect ratio | | | | | | | |
|---|---|---|---|---|---|---|---|---|
| 50 | 0.50 | 0.32 | 0.26 | 0.22 | 0.19 | 0.16 | 0.12 | 0.10 |
| 60 | 0.72 | 0.46 | 0.38 | 0.32 | 0.27 | 0.23 | 0.18 | 0.14 |
| 70 | | 0.62 | 0.52 | 0.43 | 0.37 | 0.32 | 0.24 | 0.19 |
| 80 | | 0.81 | 0.67 | 0.57 | 0.48 | 0.42 | 0.32 | 0.25 |
| 90 | | | 0.85 | 0.72 | 0.61 | 0.53 | 0.40 | 0.32 |
| 100 | | | | 0.88 | 0.75 | 0.65 | 0.50 | 0.39 |
| 110 | | | | | 0.91 | 0.79 | 0.60 | 0.48 |
| 120 | | | | | | 0.94 | 0.72 | 0.57 |
| 130 | | | | | | | 0.84 | 0.66 |
| 140 | | | | | | | | 0.77 |
| 150 | | | | | | | | 0.88 |

Fig. 11 is a schematic three-dimensional illustration of the wire 200 during the cutting process through the ingot 302. The wire 200 may have any shape as disclosed herein.

According to the embodiments described herein, a wire guide is provided that is adapted for guiding the wire as described herein. Accordingly, it is typical that the wire guide is provided with grooves specifically adapted for the wire that includes a non-circular cross-section.

According to some embodiments, the wire has a rectangular cross-section. The wire is guided over the wire guide in such a manner that one of the slicing sides of the wire contacts the wire guide. Thereby, it is typically guided by grooves adapted for the rectangular wire.

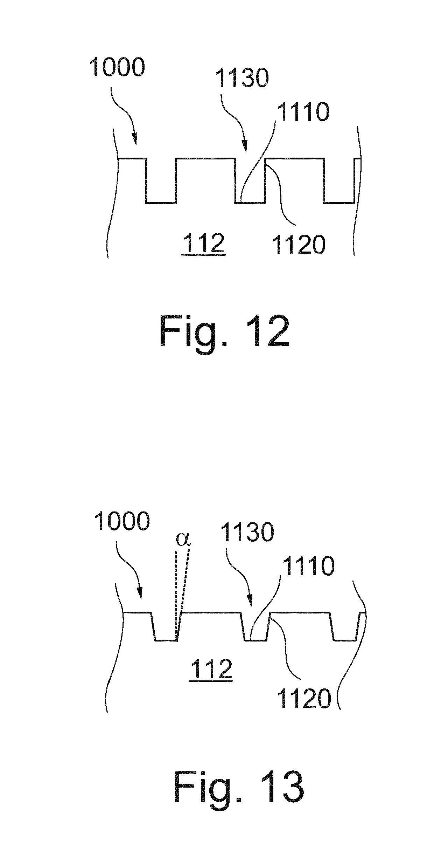

Fig. 12 is an excerpt of an exemplary embodiment of a wire guide 112 according to embodiments described herein. Evidently, the shown cross-section of a part of the wire guide 112 could also refer to the respective part of the wire guide 114, 116, or 118 in Figs. 1 and 2. The excerpt shows part of the outer surface 1000 of the wire guide 112 that is provided with grooves 1130. As shown in this embodiment, the grooves have a rectangular cross-section. Typically, the grooves are non-square, namely, according to embodiments, they have a larger depth (i.e., length of the side wall 1120) than the width of the groove bottom 1110. For instance, and not limited to the shown embodiment of Fig. 12, the aspect ratio of the grooves, i.e. the ratio between the groove's depth to the groove bottom width, is below 1.0, more typically below 0.7, and even more typically below 0.5 or even 0.25. The grooves are adapted for receiving the wire as described herein.

The grooves as described herein may particularly have a cross-section that has a trapezoidal shape. This is illustrated in Fig. 13 wherein the wire guide 112 is provided with a surface 1000. Evidently, the shown cross-section of a part of the wire guide 112 could also refer to the respective part of the wire guide 114, 116, or 118 in the Figures of Fig. 1 and 2. The surface 1000 that is adapted for contacting the wire in order to guide it shall be called "contact surface" herein. The contact surface 1000 of the wire guide is typically provided with the grooves 1130, which are arranged at predetermined and regular distances. This distance may also be called "pitch".

As exemplarily illustrated in Fig. 13, but not limited to the shown embodiment, the groove 1130 is typically provided with a bottom 1110 that is typically flat. The bottom may also be referred to as "bottom surface" since the bottom in the provided grooves has an extension. The extension typically corresponds to the width of the back side of the wire (which, in turn, is often identical to the width of the slicing side of the wire). For instance, the bottom extension can be at least 50 µm, at least 80 µm, at least 100 µm, or at least 130 µm.

The bottom surface is normally parallel to the contact surface and is adapted for receiving a flat back side of the wire, such as in the case of a rectangular wire. The grooves 1130 may furthermore be provided with inclined side walls 1120 wherein the inclination angle, also called "aperture angle" herein, opens in the direction towards the contact surface, as illustrated in Fig. 13. The aperture angle is defined as the angle with respect to the perpendicular to the contact surface, such as the contact surface 1000 illustrated in Fig. 13. The aperture angle α is shown in Fig. 13. The aperture angle can be between 0° and 10°, more typically smaller than 5° or even smaller than 3°.

According to the embodiment illustrated in Fig. 13, the shape of the grooves is trapezoidal. The term "trapezoidal" or "trapezoid" as used herein refers to the understanding in the art that two sides of a trapezoid are parallel to each other. In the present understanding, this would be the bottom of the groove that is parallel to the surface 1000 of the wire guide. However, it shall be noted that the bottom, for instance for production reasons, could also include some curvature. Furthermore, it is envisaged that the two side walls 1120 have the same aperture angle; however, differing aperture angles are not excluded from the present scope.

Presently described embodiments are particularly directed at the use of a wire for semiconductor sawing wherein the wire has a non-round cross-section, and wherein one side of the wire has a larger extension than the other side (typically the wire web side). The side with the smaller extension (typically the slicing side) shall be used as the side slicing through the semiconductor material, whereas the other side with the larger extension shall allow the wire to provide sufficient stability of the wire.

According to embodiments, the wire having two sides of different extension shall be stored and provided on a wire feed spool (see reference number 134 in Fig. 1) in such a manner that the side with the longer extension faces the wire feed spool. Similarly, it is possible that the wire is stored again, after sawing, on the wire take-up spool in such a manner that the side having the longer extension faces the wire take-up spool.

Accordingly, the take-up spool and/or the feed spool are adapted to store the wire with the slicing side of the wire facing the adjacent wire. In particular, according to presently disclosed methods, the wire is stored on the take-up spool and/or the feed spool in such a manner that the wire web side of the wire is oriented parallel to the surface of the spool.

Coiling the wire on the wire feed spool as discussed may require a rotation of the wire at 90° after uncoiling the wire from the feed spool. This can be done by subsequent positioning of a wire guide as described herein so that the wire is forced into the grooves of the wire guide. In other words, the wire rotates at 90° between the time it leaves the feed spool and contacts the wire guide of the wire saw. Additionally, it is possible that intermediate wire guides are provided with grooves whose bottoms are inclined so as to facilitate the rotation of the wire. For instance, it is possible to provide one intermediate wire guide between the feed spool and the wire guide of the wire saw with the intermediate wire guide having a bottom surface that is inclined at an angle of 45°. The same applies to an intermediate wire guide positioned between a wire guide of the wire saw as described herein and the take-up spool.

According to another aspect described herein, a method for retrofitting a wire saw is provided. The method typically includes replacing the existing wire guides that are adapted for circular wire with the wire guides as described herein. For instance, at least two, such as two or four existing wire guides, may be replaced with at least two, such as two or four wire guides as described herein. It is also possible that the method further includes replacing the existing wire feed spool, which is adapted for circular wire with a wire feed spool as disclosed herein, and/or replacing the existing wire take-up spool that is adapted for circular wire with a wire take-up spool as disclosed herein.

The present disclosure provides a wire for a wire saw that allows sawing through a semiconductor material, such as an ingot, wherein the overall kerf loss is reduced as compared to a wire with a circular diameter. At the same time, the stability of the wire does not suffer from increased breakage rates or other failure rates. Specific shaping of the slicing side surface furthermore allows a better accumulation of slurry in the case of a slurry based sawing. In the case of diamond sawing, the slicing side of the wire may be provided with a layer of abrasive diamonds.

In summary, the present disclosure reconciles the need for lowering the raw material loss (i.e. reducing the kerf loss) while maintaining, or even allowing to decrease the failure rate, and to increase the slicing precision due to a possible increase of the tension applied to the wire. In particular, the possibility to increase the wire tension ensures a proper guidance of the wire and limits the wire deflection during the sawing process. Limiting the wire deflection improves the wafer thickness homogeneity.

Additionally, it is possible to provide a structure and/or texture on the slicing side of the wire. This has been described in particular with reference to the Figures 4 to 7. Providing such a structure and/or texture, such as one or more indentations, further enhances the sawing property of the wire. Furthermore, it is possible to implement a diamond layer fixed on the slicing sides only, leaving the wire web sides free of diamond coating. This reduces the amount of diamond grit per meter of wire compared to circular wire, and thus contributes to an overall reduction of the costs of the wire and consequently of the sawing process.

While the foregoing is directed to embodiments of the invention, other and further embodiments of the invention may be devised without departing from the basic scope thereof, and the scope thereof is determined by the claims that follow.

## Claims

1. A wire (200) adapted for sawing semiconductor material (102; 104; 106; 108), wherein the wire includes a non-circular cross section.

2. The wire according to claim 1, wherein the wire cross-section is rectangular, preferably non-square, and wherein the wire defines one or more slicing sides for slicing through the semiconductor material, and a one or more wire web sides that are perpendicular to the one or more slicing sides.

3. The wire according to claim 2, wherein the width of the one or more slicing sides is smaller than the width of the one or more wire web sides.

4. The wire according to claim 2 or 3, wherein the aspect ratio defined as the ratio between the one or more slicing sides and the one or more wire web sides is less than 0.7, preferably less than 0.5, and even more preferably less than 0.25.

5. The wire according to any of claims 2 to 4, wherein the one or more slicing sides have a width of less than 120 µm, preferably less than 100 µm, and even more preferably less than 80 µm.

6. The wire according to any of claims 2 to 5, wherein the one or more slicing sides of the wire are provided with one or more indentations (400, 600, 700), wherein optionally the one or more indentations (700) extend along the wire direction and/or the one or more indentations (400, 600) extend along the wire's width.

7. The wire according to any of the preceding claims, wherein the wire shape is chosen from a bare type (300) shape, crimped-type (400) shape, fixed abrasive rim-type (500) shape, saw tooth-type (600) shape, a half pipe type (700) shape, trapezoidal shape, or any combination thereof.

8. The wire according to any of the preceding claims, wherein the wire (200) is a diamond wire.

9. A method for coiling the wire according to any of claims 3 to 8 on a spool (134, 138), the spool having a spool surface (135, 139), the method comprising:
coiling the wire in a manner that one of the one or more wire web sides face the spool surface (135, 139).

10. A wire guide (112, 114, 116, 118) adapted for guiding the wire (200) for sawing semiconductor material (102, 104, 106, 108) according to any of the claims 1 to 8, the wire guide comprising at least one groove that includes a rectangular or trapezoidal cross-section.

11. The wire guide according to claim 10, wherein the at least one groove is provided with a bottom surface (1110), wherein the width of the bottom surface (1110) is optionally at least 50 µm.

12. The wire guide according to any of claims 10 or 11, wherein the at least one groove is provided with two side walls that are inclined at an aperture angle (α), wherein the aperture angle is optionally between 0° and 10°, preferably smaller than 5°.

13. The wire guide according to any of claims 10 to 12, wherein the groove has a groove aspect ratio of less than 0.7, preferably less than 0.5, and even more preferably less than 0.25.

14. A wire saw (100) for cutting an ingot made of semiconductor material comprising at least one wire guide for guiding the wire according to any of claims 10 to 13.

15. A method for retrofitting a wire saw (100), comprising:
- removing at least one wire guide from the wire saw; and
- mounting at least one wire guide (112; 114; 116; 118), according to any one of claims 10 to 13, to the wire saw.
